# EUROPEAN PATENT APPLICATION

(11) **EP 4 382 453 A1**
(43) Date of publication of application: **12.06.2024**
(21) Application number: 22306826.3
(22) Date of filing: 08.12.2022
(51) Int. Cl.: B65F 1/14, B60B 35/04, F16C 27/06

(54) **WASTE-COLLECTION BIN INCLUDING NOISE-REDUCTION MEANS**

(71) Applicant: SULO France, 92700 Colombes (FR)
(72) Inventor: FRANK, Stanislav, 49088 Osnabrück (DE); BORCH, Christopher, 30419 Hannover (DE)
(74) Representative: LLR

(57) **Abstract**

The invention concerns a wheeled waste-collection bin comprising :
- an axle carrying at least one wheel; and
- a container provided with at least one bearing (22) for supporting the axle, said bearing being provided with an opening (24) in which said axle can be introduced. The bearing (22) also comprises, around the opening (24), a web (30) comprising at least one radial slot (34), such that the web (30) is able to receive and maintain the axle within the opening (24) by deforming elastically when the axle is introduced into the opening (24).

## Description

The invention relates to the domain of waste collection, and more particularly to wheeled waste-collection bins such as two-wheeled and three-wheeled collection bins.

Pulling or pushing a wheeled waste-collection bin over the ground, especially over a rough surface, can prove to be very noisy. Most of this noise is due to vibrations transmitted by the axle and/or the wheels to the container, and to the axial and radial movement of the axle carrying the wheel within the opening of its bearing. This is particularly the case when the container of the bin is empty, which acts as a resonance box.

To avoid this phenomenon, it has been attempted to set a very tight tolerance for the bearing opening, or to add flat surfaces and/or round shapes on the inner contour of the bearing to try and keep the axle within a tight tolerance. However, in practice this almost never succeeds because the axle requires some radial clearance in the bearing opening to be mounted. Hence, on the one hand, should the tolerance be too tight, it becomes very difficult to mount the axle, while on the other hand, leaving the slightest radial clearance allows the axle to move which in turn creates the vibrations that produce noise when the bin is rolling. Moreover, the axial and radial movement of the axle - usually made of metal - within the bearing - usually made of plastic - tends to wear the bearing down and enlarge its opening through friction, so the radial clearance between the bearing and the axle increases over time.

A solution was therefore provided by surrounding the axle with a spring between the wheel hubs and the container, in order to apply an axial force that reduces the axial movement of the parts relative to each other.

Such as solution is described in document FR2730455 which discloses a device for mounting a wheel on an axle carried by a bearing, the wheel including a hub that extends on one of its sides. The bearing has a lager diameter than that of the axle, such that there is a free annular space between the axle and the bearing, and the device comprises a ring housing including a helical spring, engaged around the axle between the bearing and the hub of the wheel.

Yet another solution, for example shown in EP1460004, consists in inserting into the bearing opening, between the bearing and the axle, an elastomer lining. Such a lining is held between inner and outer rings. The lining and the rings are fixed in place by welding or manufactured by a co-moulding or over-moulding process.

The two above solutions, though yielding satisfactory results, require additional parts and/or specially manufactured nonstandard parts, as well as additional assembly effort, which in turn heighten the cost of manufacturing the bin. They can also make it more difficult to pull the bin for the average user.

The invention therefore aims to limit the noise produced during rolling of the bin while avoiding the above-mentioned drawbacks.

To that end, the invention concerns a wheeled waste-collection bin comprising:
- an axle carrying at least one wheel; and
- a container provided with at least one bearing for supporting the axle, said bearing being provided with an opening in which said axle can be introduced; **characterized in that** the bearing also comprises, around the opening, a web comprising at least one radial slot, such that the web it is able to receive and maintain the axle within the opening by deforming elastically when the axle is introduced into the opening.

By virtue of the presence of such a web, the axle is maintained within the opening by a flexible element such that the mechanical vibrations of the axle and/or of the wheels are not transmitted, or at best faintly, to the container. This greatly reducing the noise generated by the rolling of the bin. Indeed, these vibrations are absorbed by the web, which, due to its elasticity, may deform when the bin is rolling. The axial and/or radial movements of the axle may also be prevented, which further reduces the generated noise.

Hence, thanks to the addition of the web, the waste-collection bin is provided with an element that muffles the noise produced by the transmission of the vibrations from the axle and/or wheel and/or movement of the axle within the bearing, but without requiring major modifications to the container.

Indeed, such a web can efficiently replace an elastomer lining held by rings or ring housing and a helical spring to significantly reduce the noise generated by the rolling of the bin, while avoiding the drawbacks of their use. The use of the invention yields a very significant decrease in generated noise while allowing a significant decrease of assembly effort.

Preferably, in order to increase the flexibility of the web, it comprises at least two radial slots dividing the web into at least two flaps.

According to a preferred embodiment, the web is made of the same material as the bearing. This simplifies the adjoining of the web to the bearing, and also allows to recycle parts of used bins to manufacture the web.

Preferably, the web is integrally formed with the bearing, which allows to simplify the manufacturing of the bin by making the bearing and the web in one piece.

According to a preferred embodiment, the container being obtained by injection moulding, the web is moulded along, overmoulded or co-moulded with the bearing. This allows to produce the web along the container in one step, thus reducing the manufacturing time and cost.

According to a preferred embodiment, the web is intended to receive the axle with substantially no clearance between the axle and the bearing. This allows to further reduce the mechanical vibrations of the axle and/or of the wheels that could be transmitted to the container.

The web is preferably further configured such that, once the axle is introduced into the opening, it exerts radial forces on the axle such as to limit axial and/or radial movement of the axle within the bearing. Preventing the rotation of the axle allows for a very significant reduction in the vibrations and thus the noise produced when pulling or pushing the bin. It also prevents abrasion of the material of the web.

Preferably, the web comprises a so-called thin region the thickness of which is smaller than the overall thickness of the web, configured such as to allow bending of the web when the axle is introduced into the opening. Providing the web with a region with a lower thickness that the rest of the web allows to give flexibility to the web whilst keeping it easy to manufacture. The thickness of the thin region is chosen to provide the required flexibility for mounting and at the same time the required stiffness and rigidity while operating the bin.

According to a particular embodiment, the web has an overall annular shape or the shape of an arc of a circle. This allows to match the shape of most waste-containing bin axles which are tubular-shaped.

According to a particular embodiment, the thin region spans over a contour of the web, the thin region preferably having an overall annular shape or the shape of an arc of a circle. Having the thin region spanning over a contour of the web allows to heighten its flexibility. Making it annular or of the shape of an arc of a circle also allows to match the shape of most waste-containing bin axles which are tubular-shaped.

Preferably, the diameter of an inner contour of the web is smaller than the diameter of an outer contour of the axle. This allows the web to stay permanently in contact with the axle. This helps exerting radial forces onto the axle to maintain it in place and/or reduce vibrations.

According to a particular embodiment, the thin region is constituted by a groove formed in the web. This gives flexibility to the web whilst keeping it easy to manufacture.

Preferably, the web comprises at least two identical slots, the slots being preferably symmetrically distributed over the contour of the web. Including several slots grants further flexibility to the web. Moreover, symmetrically distributing them allows for distributing the forces exerted on the axle when it is inserted in the bearing opening, thus avoiding any damage to the web.

According to a preferred embodiment, the thickness of the radial flaps is smaller than the overall thickness of the bearing and preferably greater than the thickness of the thin region.

According to a particular embodiment which provides an even distribution of the radial forces exerted by the web around the axle, the flaps are identical and preferably have a trapezoidal shape, a square shape, a rounded shape or a triangular shape.

According to a preferred embodiment, the slot locally extends perpendicular to the inner contour of the web. Having the slot extend perpendicular to the inner contour of the web grants further flexibility to the web.

According to a preferred embodiment, to simplify its manufacturing, the waste-collection bin is obtained by injection moulding, the web being moulded along with the bearing.

### Brief description of the Figures

The invention shall be better understood upon reading the following detailed description of non-limiting exemplary embodiments, and by reference to the drawings, in which:
- Figure 1 represents a perspective view of a wheeled waste-collection bin according to a particular embodiment of the invention;
- Figure 2 is similar view of the container of the waste-collection bin of Figure 1;
- Figure 3 represents a view of a detail of Figure 2 representing the bearing area of the wheel axle;
- Figure 4 represents a view of the detail IV of Figure 3.
- Figure 5 is a cross-sectional view of Figure 1 along a plane perpendicular to the axis X-X in the region of a bearing of the container;
- Figure 6 is a perspective view of the detail VI of Figure 4.

### Detailed Description

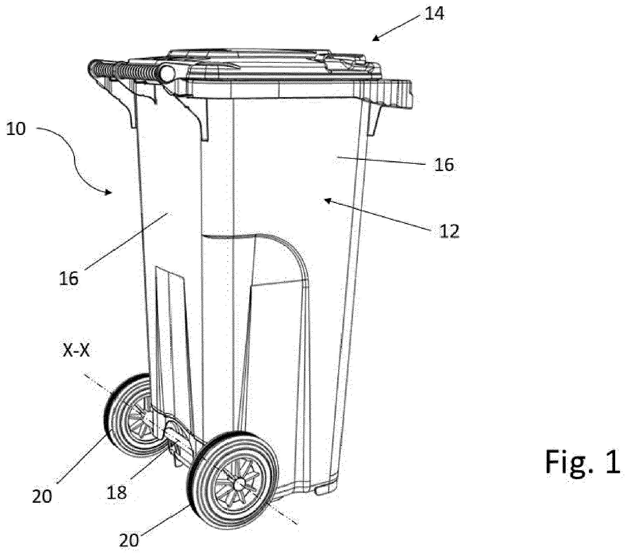

Figure 1 shows a waste-collection bin 10 according to the invention, comprising a container 12 closed by a lid 14. The container 12 is delimited by four walls 16, two opposing walls 16 being substantially parallel to each other. The bin 10 also comprises an axle 18 carrying at its ends two wheels 20. The wheels 20 rotate about an axis X-X. The axle 18 extends along axis X-X.

The container 12 is preferably made of polymeric material, such as, for example high-density polyethylene (HDPE). It is preferably obtained by injection moulding.

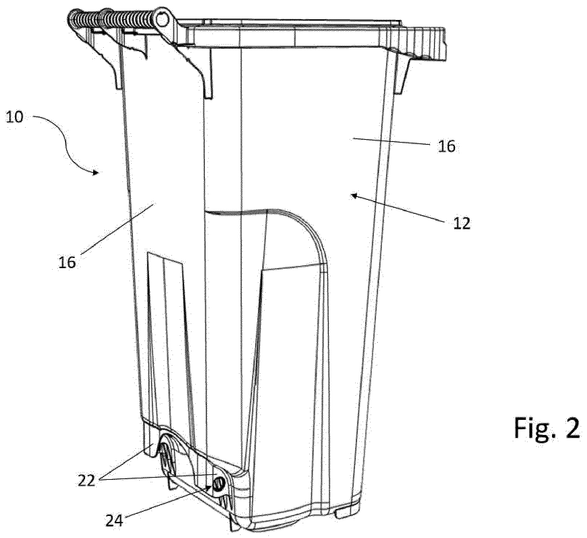

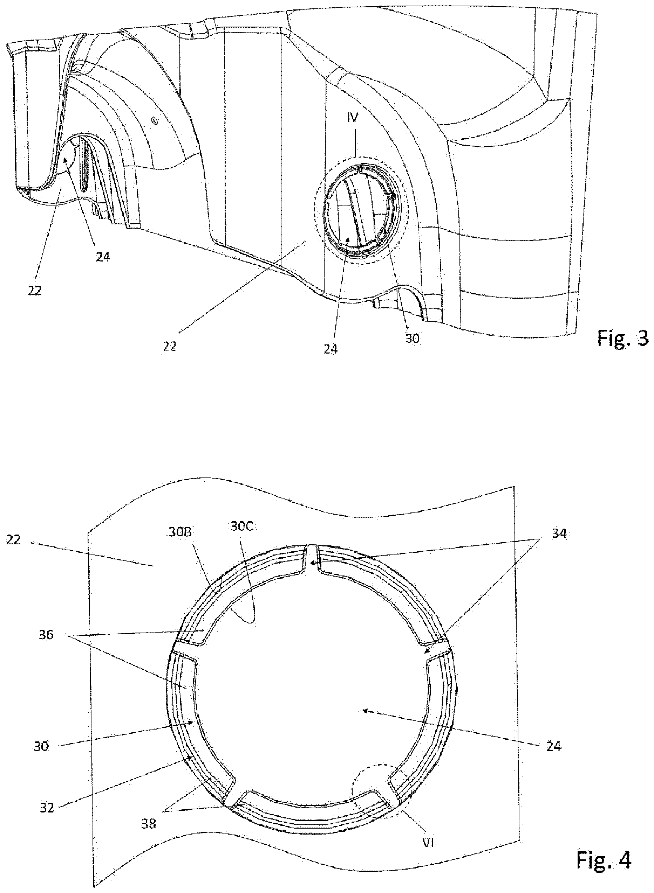

As can be seen on Figures 2 and 3, the container 12 is provided with at least one bearing 22 to support the axle 18. To be more precise, in the present example, the axle 18 is held by two parallel bearings 22 which are located at the ends of the opposing walls 16 which are opposed to the lid 14.

The axle 18 is inserted in two openings 24, each made into each bearing 22, which are facing each other, as can be seen on Figure 3. The openings 24 are substantially circular to match the circular cross-section of the axle 18, which has a tubular shape.

Each bearing 22 protrudes from one of the walls 16 and is formed integrally said wall 16. Each bearing 22 more particularly protrudes substantially perpendicular from the wall 16 and is here parallel to the other. Naturally, the shape and orientation of the bearings 22 may vary.

At least one of the bearings 22 also comprises, around the opening 24, a web 30. As can be seen on Figure 3, the bearing 22 on the right of the Figure comprises such a web 30. Preferably, both bearings 22 include such a web 30.

In the present example, the web 30 is made of the same material as the bearing 22, for example in high-density polytethylene (HDPE). However, it could also be made of another plastic material, or yet another material.

In the present example, the web 30 is integrally formed with the bearing 22, even more preferably moulded along with the bearing 22 so that the container 12 can be formed in a single moulding operation and thus ease its manufacture.

However, according to another embodiment which is not shown on the Figures, the web 30 can be made of the same material as the bearing 22, but not integrally formed with the bearing 22. In that case, the web 30 could be attached to the bearing 22 through other means. The web 30 could for example be manufactured from recycled material of used bins 10.

According to yet other embodiments which are not shown on the Figures, the web 30 could be overmoulded or co-moulded with the bearing 22, especially if the web 30 is made of another material than the rest of the bearing 22.

In the particular example shown on the Figures, and more particularly on Figure 4, the web 30 has an overall annular shape to match the shape of the axle 18. However, in a variant not shown, the web 30 could be in the shape of an arc of a circle, which also partially matches the shape of the axle 18.

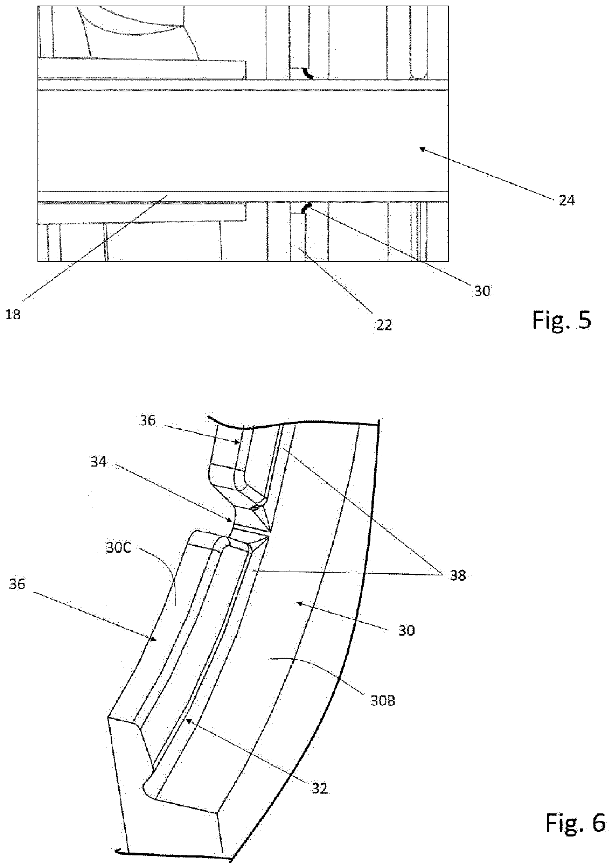

The web 30, as better shown on Figure 4, comprises at least one radial slot 34 which is configured such that it is able to receive and maintain the axle 18 within the opening by deforming elastically when the axle 18 is introduced into the opening 24. The web 30 can for example deform elastically by bending when the axle 18 is introduced within the opening 24, as can be seen on Figure 5.

The web 30 is further configured such that, once the axle 18 is introduced into the opening, it exerts radial forces on the axle 18 such as to limit axial and/or radial movement of the axle 18 within the bearing 22.

Preventing axial and/or radial movement of the axle 18 within the bearing 22 allows a very significant reduction of the vibrations and thus the noise produced when pulling or pushing the bin 10. It also prevents abrasion of the material of the web 30.

Here, the web 30 is intended to receive the axle 18 substantially with no clearance between the axle 18 and the bearing 22.

As best shown on Figures 4 and 6, the web 30 comprises an inner contour 30C which defines the opening 24 of the bearing 22 into which the axle 18 is to be inserted, and an outer contour 30B, the diameter of which is larger than the diameter of the inner contour 30C. The outer contour 30B marks the junction between the web 30 and the bearing 22.

Preferably, the diameter of the inner contour 30C of the web 30 is smaller than the diameter of an outer contour of the axle 18. This provides a better hold of the axle 18 in the bearing opening 24. This also contributes to exerting radial forces onto the axle 18 to maintain it in place and reduce vibrations. More specifically, it is preferable that the axle 18 never loses contact with the web 30. This prevents a harsh contact between the container 12 and the axle 18 when the bin 10 is rolling over rough ground, thanks to the elastic behaviour if the web 30.

Preferably, the web 30 comprises at least two radial slots 34 dividing the web 30 into at least two flaps 36.

In the particular example shown on the Figures, and as best shown on Figure 4 in particular, the web 30 includes five radial slots 34.

Including several slots 34 grants further flexibility to the web 30. The number five merely is an example and can be increased or reduced according to the requirements, in particular the maximum permissible weight of the bin 10, the weight of the axle 18, as well as the thickness and material of the web 30.

The slots 34 locally extend perpendicular to the inner contour 30C of the web, i.e. the contour that defines the opening 24. Having the slots 34 extend perpendicular to the inner contour 30C of the web grants further flexibility to the web.

As can be seen on Figure 4, the slots 34 are symmetrically distributed over the outer contour 30B of the web 30. This allows the symmetrical distribution of radial forces when the axle 18 is inserted in the bearing opening 24, thus avoiding any damage to the web 30. The slots 34 here also are for example identical to enhance the symmetry of the web 30 and of the distribution of forces from the web 30 to the axle 18.

The slots 34 divide the web 30 into several flaps 36, each spanning over an arc of a circle due to the overall annular shape of the web 30. In this particular example, due to the fact that there are five slots 34, the web 30 is divided into five flaps 36.

The slots 34 can vary in cross-section, which may be C-shaped, U-shaped of V-shaped for example. Preferably they are C-shaped or U-shaped to avoid breaking or tearing of the flaps 36. Their width and size may also vary to balance the ease of assembly and the best operating conditions. In the embodiment shown on the Figures, and as can be seen on Figure 6, the slots 34 are U-shaped.

Preferably, the flaps 36 are identical, again to allow the symmetrical distribution of radial forces when the axle 18 is inserted in the bearing opening 24. In this particular example, considering that the slots 34 are symmetrically distributed over the outer contour 30B of the web 30, the flaps 36 also are symmetrically distributed over the outer contour 30B of the web 30 for the same reason. However, this could be changed depending on the requirements.

The flaps 36 can for example have a trapezoidal shape, a square shape, a rounded shape or a triangular shape. In the embodiment shown on the figures, the flaps 36 have a trapezoidal shape, as can be seen on Figures 4 and 6. The cross-section of the flaps 36 may also vary and can be rectangular, oval or substantially triangular.

The web 30 comprises a so-called thin region 32 the thickness of which is smaller than the overall thickness of the web 30. The thin region 32 is configured to allow the web 30 to bend when the axle 18 is introduced into the opening 24. Providing the web 30 with a region that has a smaller thickness than the rest of the web 30 creates a flexibility that facilitates the assembly of the axle 18 within the opening 24.

The presence of the thin region 32 will also allow the web 30 to bend during said introduction and stay bent as long the axle 18 is mounted in the bearing 22, as can be seen on Figure 5.

Here, the thin region 32 is constituted by a groove formed in the web 30. For 120L or smaller bins, the groove 32 is for example less a few millimetres thick while the rest of the web 30 is thicker. For a more voluminous bin, this value would be higher. In general, the thickness of the web 30 and of the thin region 32 depend on the maximum permitted weight of the bin 10 and weight of the axle 18, which are higher for larger bins.

The cross-section of the groove 32 can vary. It can be C-shaped, U-shaped of V-shaped for example.

The thin region 32, here the groove 32, spans over a contour of the web 30, such as over the outer contour 30B of the web 30. Here, the web 30 having an overall annular shape, the thin region, here the groove 32, preferably also has an overall annular shape. The width of the groove 32 can vary according to the requirements. Having the thin region 32 span over a contour 30B, 30C of the web allows to heighten its flexibility.

Preferably, the groove 32 is located on the web 30 closer to the bearing 22 than the opening, i.e. rather closer to the outer contour 30B of the web 30 than its inner contour 30C that defines the opening 24. This is due to the fact that the thicker part of the web 30 should preferably be located on the inner contour 30C for a better hold of the axle 18.

In the present example, as best shown on Figures 4 and 6, the slots 34 also extend up and beyond the groove 32. As such, the slots 34 also divide the groove 32 into five smaller grooves 38. However, in a variant that is not shown, the slots 34 may divide the web 30 into several flaps 36, while leaving the groove 32 in one piece, i.e. without dividing the groove 32 into smaller grooves 38. For example, the slots 34 could extend up to the groove 32 without going through the groove 32 and hence not separating it into small grooves 38.

Preferably, the thickness of the flaps 36 is smaller than the overall thickness of the bearing 22 and preferably greater than the thickness of the thin region 32.

Thanks to the addition of the web 30, the waste-collection bin is provided with an element that reduces the vibrations transmitted by the axle 18 to the bearings 22 and thus the container 12, but without requiring any additional parts, assembly tools or major modifications to the container 12. When the web 30 is integrally formed with the bearing 22, it allows to produce it along the container 12 in one step, thus reducing the manufacturing time and cost of the bin 10. In general, the use of the invention yields a very significant decrease of the noise when rolling the bin 10.

The invention is not limited to the presented embodiments and other embodiments will clearly appear to the skilled person. Any combination of the aforementioned embodiments of variants is for example explicitly envisioned.

### References list :

10 : Waste-collection bin
12 : Container
14 : Lid
16 : Walls of the container
18 : Axle
20 : Wheels
22 : Bearings
24 : Bearing openings
30 : Web
30B : Outer contour of the web
30C : Inner contour of the web
32 : Thin region (Groove)
34 : Slots
36 : Flaps
38 : Smaller grooves

## Claims

1. A wheeled waste-collection bin (10) comprising:
- an axle (18) carrying at least one wheel (20); and
- a container (12) provided with at least one bearing (22) for supporting the axle (18), said bearing (22) being provided with an opening (24) in which said axle (18) can be introduced;
**characterized in that** the bearing (22) also comprises, around the opening (24), a web (30) comprising at least one radial slot (34) such that the web (30) is able to receive and maintain the axle (18) within the opening (24) by deforming elastically when the axle (18) is introduced into the opening (24).

2. Waste-collection bin (10) according to claim 1, wherein the web (30) comprises at least two radial slots (34) dividing the web (30) into at least two flaps (36).

3. Waste-collection bin (10) according to claim 1 or 2, wherein the web (30) is made of the same material as the bearing (22), preferably integrally formed with the bearing.

4. Waste-collection bin (10) according to any one of the preceding claims, wherein the container being obtained by injection moulding, the web (30) is moulded along, overmoulded or co-moulded with the bearing (22).

5. Waste-collection bin (10) according to any one of the preceding claims,
wherein the web (30) is intended to receive the axle (18) with substantially no clearance between the axle and the bearing.

6. Waste-collection bin (10) according to any one of the preceding claims,
wherein the web (30) is further configured such that, once the axle (18) is introduced into the opening, it exerts radial forces on the axle (18) such as to limit axial and/or radial movement of the axle (18) within the bearing (22).

7. Waste-collection bin (10) according to any one of the preceding claims, wherein the web (30) comprises a so-called thin region (32) the thickness of which is smaller than the overall thickness of the web (30), configured such as to allow bending of the web (30) when the axle (18) is introduced into the opening (24).

8. Waste-collection bin (10) according to any one of the preceding claims, wherein the web (30) has an overall annular shape or the shape of an arc of a circle.

9. Waste-collection bin (10) according to claims 7 and 8 taken in combination,
wherein the thin region (32) spans over a contour of the web (30), the thin region (32) preferably having an overall annular shape or the shape of an arc of a circle.

10. Waste-collection bin (10) according to claim 8 or 9, wherein the diameter of an inner contour (30C) of the web (30) is smaller than the diameter of an outer contour of the axle (18).

11. Waste-collection bin (10) according to claim 7 or 9, wherein the thin region (32) is constituted by a groove formed in the web (30).

12. Waste-collection bin (10) according to any one of the preceding claims, wherein the web (30) comprises at least two identical slots (34), the slots (34) being preferably symmetrically distributed over the contour of the web (30).

13. Waste-collection bin (10) according to any one of claims 2 to 12, wherein the thickness of the flaps (36) is smaller than the overall thickness of the bearing (22) and preferably greater than the thickness of the thin region (32).

14. Waste-collection bin (10) according to any one of claims 2 to 13, wherein the flaps (36) are identical and preferably have a trapezoidal shape, a square shape, a rounded shape or a triangular shape.

15. Waste-collection bin (10) according to any one of the preceding claims, wherein the slot (34) locally extends perpendicular to the inner contour of the web (30).
